# EUROPÄISCHE PATENTSCHRIFT

(11) **EP 4 437 842 B1**
(45) Veröffentlichungstag und Bekanntmachung des Hinweises auf die Patenterteilung: **06.05.2026**
(21) Anmeldenummer: 24165570.3
(22) Anmeldetag: 22.03.2024
(51) Int. Cl.: A01K 5/00, A01D 69/02

(54) **FUTTERMISCHWAGEN UND VERFAHREN ZUM BETREIBEN EINES FUTTERMISCHWAGENS**
FEED MIXING WAGON AND METHOD FOR OPERATING A FEED MIXING WAGON
WAGON MÉLANGEUR DE FOURRAGE ET PROCÉDÉ DE FONCTIONNEMENT D'UN WAGON MÉLANGEUR DE FOURRAGE

(30) Priorität: 30.03.2023 DE 102023108079
(43) Veröffentlichungstag der Anmeldung: 02.10.2024
(73) Patentinhaber: B. Strautmann & Söhne GmbH u. Co. KG, 49196 Bad Laer (DE)
(72) Erfinder: Strautmann, Wolfgang, 49196 Bad Laer (DE)
(74) Vertreter: Dr. Träger & Strautmann PAe PartG mbB

(56) Entgegenhaltungen:
- EP-A1- 3 038 460
- WO-A1-2016/078757
- WO-A1-2022/094577
- DE-A1- 10 345 322
- NL-B1- 2 017 472
- US-A1- 2020 077 694
- US-B1- 9 192 897

## Beschreibung

Die Erfindung betrifft einen Futtermischwagen nach dem Oberbegriff des Anspruchs 1 sowie ein Verfahren zum Betreiben eines Futtermischwagens gemäß Anspruch 13.

Es sind Futtermischwägen bekannt, welche insbesondere zur Bereitstellung von Futter für Vieh auf einer Hofstelle ausgebildet sind. So ist beispielsweise aus der Offenlegungsschrift WO 2016/078757 A1 ein Futtermischwagen bekannt, welcher für einen autonomen Betrieb ausgebildet ist. Das Antriebsaggregat in Form eines Verbrennungsmotors ist für einen Fahrbetrieb des Futtermischwagens und für einen Betrieb von Arbeitsorganen des Futtermischwagens, welche auch als Verbraucher bezeichnet werden können, ausgebildet.

Aus NL 2 017 472 B1 ist ein Futtermischwagen mit einem Verbrennungsmotor und einem Elektromotor bekannt, wobei der Elektromotor dazu vorgesehen ist, durch das Mischsystem verursachte Leistungsspitzen zu kompensieren. Der zusätzliche Elektromotor ist somit im Bedarfsfall zuschaltbar. Somit wird dann, wenn der Elektromotor nicht benötigt wird, Energie eingespart.

Aus US 9 192 897 B1 ist ein Futtermischwagen auf LKW-Basis bekannt. Der LKW hat einen Verbrennungsmotor, welcher über einen Generator mehrere Elektromotoren des Futtermischsystems antreibt. Der Verbrennungsmotor dient somit ausschließlich zum Antrieb des Generators.

Aus DE 103 45 322 A ist ein von einem Traktor gezogener Futtermischwagen bekannt. Der Traktor weist einen Verbrennungsmotor auf, der einen Generator antreibt. Der Mischwagen umfasst zwei vertikale Mischschnecken, die beide separat von Elektromotoren 32, 33 angetrieben werden. Die Stromversorgung der Elektromotoren erfolgt über den Generator des Traktors.

Aus US 2020/0077694 A1 D6 ist ein LKW mit einem Aufbau in Form eines Futtermischbehälters bekannt. Der Futtermischbehälter umfasst ein Mischwerk, eine Antriebsquelle, ein stufenloses Getriebe und ein elektronisches Steuerungssystem. Als Antriebsquelle kann eine beliebige Quelle, beispielsweise ein Verbrennungsmotor oder ein Elektromotor oder ein anderer Antrieb vorgesehen sein.

Aus WO 2022/094577 A1 D7 ist ein Futterverteilsystem bekannt, welches auf einem intelligenten Steuerungsverfahren zum teil- oder vollautomatischen Betrieb des Futtermischwagens basiert. Die "Hardware", also der Futtermischwagen selbst, wird nur am Rande erwähnt. Der abstrakt beschriebene Futtermischwagen impliziert zwar das Vorhandensein einer Antriebseinrichtung, lässt jedoch offen, welche Art von Motor oder Antrieb zum Einsatz kommt.

Problematisch bei derartigen Futtermischwagen ist, dass sie, sofern sie ausschließlich mit dem Antriebsmotor in Form eines Elektromotors ausgebildet sind, eine längere Standzeit zur Aufladung einer zum Betreiben des Elektromotors notwendigen Energiequelle, mit anderen Worten, einer Batterie, erfordern. Weiterhin ist die mögliche Einsatzzeit eines Arbeitszyklusses, also der Zeitraum, vom Start eines Einsatzes mit zunächst maximal geladenen Batterien bis zur Beendigung des Einsatzes wegen eines zu geringen Batterie-Füllstandes stark von der Größe der Batterien abhängig. Große Batterien erfordern einen großen Bauraum und sind zudem teuer.

Sofern der Antriebsmotor in Form einer Verbrennungskraftmaschine ausgebildet ist entstehen Abgase, die insbesondere dann, wenn der Futtermischwagen in ganz oder teilweise geschlossenen Stallanlagen eingesetzt wird, die Gesundheit von Menschen und Tieren beeinträchtigen und dementsprechend unerwünscht sind. Ein weiterer, nicht zu vernachlässigender Faktor sind die Geräuschemissionen und der damit verbundene, negative Einfluss auf Mensch und Tier (=Stress).

Aufgabe der Erfindung ist es, die beschriebenen Nachteile zu beseitigen und einen Futtermischwagen bereitzustellen, welcher für einen optimierten Betrieb ausgebildet ist. Eine weitere Aufgabe der Erfindung ist es, ein Verfahren zum Betreiben eines Futtermischwagens bereitzustellen, mit dessen Hilfe der Futtermischwagen ein optimiertes Betriebsprofil aufweist.

Diese Aufgabe wird gelöst durch einen Futtermischwagen mit den Merkmalen des Patentanspruchs 1. Die weitere Aufgabe wird gelöst durch ein Verfahren zum Betreiben eines Futtermischwagens mit den Merkmalen des Patentanspruchs 11.

### Definitionen:

Unter einem Außenbetrieb wird der Betrieb des Futtermischwagens außerhalb von Gebäuden verstanden.

Unter einem Innenbetrieb wird der Betrieb des Futtermischwagens innerhalb von Gebäuden verstanden.

Unter einem Gebäude wird ein Bauwerk verstanden, das Räume einschließt, betreten werden kann und dem Aufenthalt von Menschen, Tieren oder der Lagerung von Sachen dient.

Ein erfindungsgemäßer Futtermischwagen umfasst:
- einen Antriebstrang mit einem Antriebsaggregat,
- ein Fahrgestell mit einer Radaufhängung,
- einen Vorratsbehälter mit einem Verbraucher in Form einer Mischeinrichtung zur Verarbeitung eines oder mehrerer in den Vorratsbehälter eingefüllten Futtermittels und
- ein Steuerungssystem zum Betreiben des Futtermischwagens mit einer ersten Steuereinheit.

In einer ersten Ausführungsform umfasst der Futtermischwagen keine integrierte Entnahmeeinrichtung zur Aufnahme von Futter aus Futterlagerstätten, sondern wird im Arbeitseinsatz vielmehr mittels einer zweiten Arbeitsmaschine, beispielsweise einem Traktor mit einer Ladeschaufel, befüllt. In einer anderen Ausführungsform kann der Futtermischwagen eine integrierte Entnahmeeinrichtung, beispielsweise ein Schneidschild oder eine Fräse zur Entnahme von Futterkomponenten aufweisen.

Unter einem Antriebsstrang werden die Bauteile verstanden, die von einem Antriebsaggregat, beispielsweise einem Antriebsmotor, bis zu einem Verbraucher, beispielsweise einer Mischeinrichtung, reichen und die Leistung für den Antrieb des Verbrauchers übertragen. Diese können z.B. diesel-elektrisch, diesel-hydraulisch oder auch elektrisch-hydraulisch ausgeführt sein.

Bei einem diesel-elektrischen Antriebsstrang kann vorgesehen sein, dass der Dieselmotor zunächst einen Generator antreibt und die vom Generator erzeugte, elektrische Antriebsleistung über ein elektrisches Leitungsnetz auf einen oder mehrere Verbraucher übertragen wird.

Bei einem diesel-hydraulischen Antriebsstrang kann vorgesehen sein, dass der Dieselmotor zunächst eine Hydraulikpumpe antreibt und die von der Hydraulikpumpe erzeugte Antriebsleistung über ein hydraulisches Leitungsnetz auf einen oder mehrere Verbraucher übertragen wird.

Bei einem elektrisch-hydraulischen Antriebsstrang kann vorgesehen sein, dass die von der Stromquelle zur Verfügung gestellte, elektrische Energie mittels Elektromotor gewandelt und eine Hydraulikpumpe angetrieben wird. Weiterhin kann die von der Hydraulikpumpe erzeugte Antriebsleistung über ein hydraulisches Leitungsnetz auf einen oder mehrere Verbraucher übertragen werden.

Selbstverständlich ist es auch möglich, als Antriebsmotor einen anderen Motor als einen Dieselmotor einzusetzen, beispielsweise einen Benzinmotor oder eine Brennstoffzelle. Weiterhin kann die vom Antriebsaggregat zur Verfügung gestellte Antriebsleitung auch über einen rein mechanischen oder rein elektrischen Antriebsstrang auf einen oder mehrere Verbraucher übertragen werden.

Erfindungsgemäß umfasst das Antriebsaggregat, welches wirkverbunden mit dem Fahrgestell ausgebildet ist, ein erstes Antriebsmodul in Form einer Verbrennungskraftmaschine und wenigstens ein zweites Antriebsmodul in Form eines Elektromotors, wobei das erste Antriebsmodul und das zweite Antriebsmodul wirkverbindbar ausgeführt sind.

Das bedeutet, dass das Antriebsaggregat, welches für einen Fahrbetrieb des Futtermischwagens ausgebildet ist, für seinen Fahrbetrieb eine Verbrennungskraftmaschine und einen Elektromotor aufweist. Beide Antriebsmodule sind unabhängig voneinander in einem Alleinbetrieb oder gemeinsam zu betreiben, wobei bei einem gemeinsamen Betrieb eine Leistungssteigerung des Fahrbetriebs gegenüber mit dem Alleinbetrieb ermöglicht ist.

Der Futtermischwagen umfasst zudem eine Batterie oder ein Batteriesystem zur Speicherung elektrischer Energie. Ein System zur Batterieladung, beziehungsweise eine Energiequelle, kann dabei on-board in Form einer Verbrennungskraftmaschine, beispielsweise eines Dieselmotors mit Generator oder off-board in Form eines externen Stromnetz vorliegen. Ein externes Stromnetz kann nicht nur in Form eines öffentlich zugänglichen Stromnetzes vorliegen, sondern beispielsweise auch an eine Photovoltaikanlage, eine Biogasanlage oder eine stationäre Batterie gekoppelt sein. Das Aufladen der Futtermischwagen kann mit bekannten Ladesystemen erfolgen.

Ein wesentlicher Vorteil der Erfindung ist, dass bei Befahren des Futtermischwagens eines im Wesentlichen geschlossenen Gebäudes, wie beispielsweise eines Stalls, die durch den Betrieb des Futtermischwagens bedingten Emissionen reduziert werden. So können insbesondere Abgasemissionen bei elektrischem Betrieb ganz vermieden und Lärmemissionen stark minimiert werden. Außerhalb des geschlossenen Gebäudes kann das erste Antriebsmodul genutzt werden, so dass die Batterie des Futtermischwagens im Außenbetrieb nicht als Energielieferant genutzt werden muss, sondern vielmehr, wenn ein niedriger Batteriestand es erfordert, durch den beim Außenbetrieb aktivierten Verbrennungsmotor aufladbar sein kann.

Neben der Emissionsreduktion im Innenbetrieb ergibt sich als weiterer Vorteil eine signifikante Kostenreduktion des Futtermischwagens, da ein oder beide Antriebsmodule hinsichtlich ihrer Leistung, und somit auch hinsichtlich ihres Bauraumbedarfs baukleiner und somit kostengünstiger ausgebildet werden können. Insbesondere kann das erste Antriebsmodul, also die Verbrennungskraftmaschine, kleiner ausgeführt werden als bei einem Futtermischwagen ohne zusätzliches zweites Antriebsmodul. Ein somit weiterer Vorteil ist ein Gewinn an Bauraum, da die baukleinere Verbrennungskraftmaschine einen geringeren Platzbedarf hat und somit Bauraum gewonnen werden kann. Dieser Bauraum kann beispielweise zur Unterbringung zusätzlicher oder größerer Batterien genutzt werden.

Bei dem erfindungsgemäßen Futtermischwagen handelt es sich somit um ein Hybridfahrzeug, welches die benötigte Energie aus einem elektrischen Speicher, aus Verbrennungskraftstoff oder aus beiden Energiequellen bezieht. In den Phasen, in denen der Verbrennungsmotor in Betrieb ist, kann auch vorgesehen sein, dass der Verbrennungsmotor die Batterie lädt und die zum Fahrbetrieb notwenige Leistung in elektrischer Form bereitgestellt wird. Als Bonuseffekt ergibt sich zudem die Option einer Rekuperation, also einer Rückgewinnung und Nutzbarmachung von Bremsenergie durch Einspeisung dieser Energie in den Energiespeicher des zweiten Antriebsmoduls.

Erfindungsgemäß ist ein Energiespeicher zur Bereitstellung von elektrischer Energie für das zweite Antriebsmodul und/oder des Verbrauchers ausgebildet. Bei dem Energiespeicher handelt es sich vorzugsweise um eine oder mehrere Batterien. Das heißt mit anderen Worten, dass mit Hilfe des Energiespeichers der Fahrbetrieb und/oder der Betrieb wenigstens eines Verbrauchers, beispielsweise einer Ausbring- oder Mischeinrichtung, ermöglicht ist.

In einer weiteren Ausgestaltung des erfindungsgemäßen Futtermischwagens umfasst das erste Antriebsmodul einen Generator zur mittelbaren Energieversorgung des zweiten Antriebsmoduls. Das heißt mit anderen Worten, dass dem ersten Antriebsmodul ein Generator zur Energieerzeugung zugeordnet ist, welcher Energie für das zweite Antriebsmodul bereitstellen kann. Somit ist es bereits bei Betrieb des ersten Antriebsmoduls möglich, Energie für das zweite Antriebsmodul herbeizuführen. Dies führt somit zu einem energieeffizienten Futtermischwagen.

In einer weiteren Ausgestaltung des erfindungsgemäßen Futtermischwagens ist die erste Steuereinheit zur Ansteuerung des Antriebsaggregates bzw. einer diesem zugeordneten Steuereinheit und/oder des Verbrauchers, bzw. einer diesem zugeordneten Steuereinheit, ausgebildet. Die erste Steuereinheit stellt somit eine Art Master-Steuerung dar, welcher etwaige andere Steuerungen und Subsysteme untergeordnet sein können.

Dabei ist es möglich, dass das erste Antriebsmodul (Verbrennungskraftmaschine) und das zweite Antriebsmodul (E-Motor) jeweils eine eigene Steuerung aufweisen. Hinsichtlich des zweiten Antriebsmoduls könnte diese beispielsweise in einen Inverter integriert sein. Unter einem Inverter wird ein Wechselrichter verstanden, welcher einen ein- oder mehrphasigen Ausgangsstrom bzw. eine ein bzw. mehrphasige Ausgangsspannung erzeugt und die Betriebsdaten des Antriebsmoduls überwacht.

In einer weiteren Ausgestaltung des erfindungsgemäßen Futtermischwagens umfasst der Futtermischwagen weiterhin eine Entnahmeeinrichtung und/oder weitere Verbraucher zur Entnahme, Verarbeitung und Ausbringung der Futtermittel. Die erste Steuereinheit ist zum Betreiben der Entnahmeeinrichtung und/oder der weiteren Verbraucher des Futtermischwagens ausgebildet. Der Vorteil ist darin zu sehen, dass mit Hilfe der ersten Steuereinheit sowohl das Antriebsaggregat als auch die Verbraucher, unabhängig ihrer Form, betrieben werden können. Das heißt mit anderen Worten, dass die Entnahmeeinrichtung, die Mischeinrichtung, eine Pumpe, eine Wiegeeinrichtung, ein Förderband und weitere Verbraucher, welche am Futtermischwagen ausgebildet sind, keine mit der ersten Steuereinheit möglicherweise kommunizierende Steuerung benötigen, sondern direkt von der ersten Steuereinheit betrieben werden können. Unabhängig davon, dass die genannten oder andere Subsysteme eine eigene Steuereinheit nicht zwingend benötigt, können solche eigene Steuereinheit jedoch vorgesehen sein um beispielsweise die Komfortabilität der Bedienung zu verbessern.

In einer weiteren Ausgestaltung des erfindungsgemäßen Futtermischwagens weist das Steuerungssystem eine zweite Steuereinheit auf, welche mit der ersten Steuereinheit kommunizierend ausgebildet ist. Damit ist die Möglichkeit gegeben, beispielsweise bedienungsbedingt, die Steuereinheiten entsprechend auszubilden. So könnte beispielsweise die erste Steuereinheit von der zweiten Steuereinheit aktiviert werden, wohingegen die zweite Steuereinheit beispielsweise manuell bedient wird.

Beispielsweise ist es möglich, die zweite Steuereinheit nicht auf dem Futtermischwagen anzuordnen und eine Art Fernsteuerung auszubilden, mittels derer die erste Steuereinheit bedienbar ist. Bei der zweiten Steuereinheit kann es sich beispielsweise um eine cloudbasierte Anwendung, einen Tablet-Computer, Tablet-PC oder auch um ein Mobiltelefon, insbesondere ein Smartphone, handeln. Unter einem Smartphone wird ein Mobiltelefon mit umfangreichen Computerfunktionalitäten verstanden.

Die Kommunikation zwischen erster und zweiter Steuereinheit kann mittels Cloud-Computing erfolgen. Nach Verständnis der Fachwelt beschreibt das Cloud-Computing ein Modell, das bei Bedarf - meist über das Internet und geräteunabhängig - zeitnah und mit wenig Aufwand geteilte Computerressourcen als Dienstleistung, etwa in Form von Servern, Datenspeicher oder Applikationen, bereitstellt und nach Nutzung abrechnet. Angebot und Nutzung dieser Computerressourcen ist definiert und erfolgt in der Regel über eine Programmierschnittstelle (API) bzw. für Anwender über eine Website oder App.

In einer weiteren Ausgestaltung des erfindungsgemäßen Futtermischwagens ist die zweite Steuereinheit außerhalb des Futtermischwagens ausgebildet.

Damit besteht die Möglichkeit, sogenannte Onboard-Rechenressourcen der ersten Steuereinheit vorrangig zu verwenden, um einen Ladezustand des Energiespeichers zu verwalten und die Antriebsmodule gem. der Anforderungen des Endanwenders (=Bedienereingabe) unter Berücksichtigung abgeleiteter Nutzungsprofile anzusteuern.

Die Offboard-Rechenressourcen einer zweiten Steuereinheit sind primär vorgesehen, um Nutzungsprofile abzuleiten und auf dieser Basis eine optimierte Verwaltung des Ladezustandes des Energiespeichers sowie ein Einsatzprofil der Antriebsmodule vorzuschlagen.

Hintergrund ist, dass die Implementierung von künstlicher Intelligenz oftmals große Rechenkapazitäten benötigt um Algorithmen zu trainieren, Aktionsvarianten miteinander zu vergleichen und hieraus Steuerungsbefehle abzuleiten. Die Steuerungsbefehle können die erste und die zweite Steuereinheit einzeln, aber auch das Gesamt-Steuerungskonzept betreffen.

Die benötigten Rechenkapazitäten können vorzugsweise über eine Cloud bereitgestellt werden. Somit ist es möglich, die erste Steuereinheit technisch einfach als ausführendes Glied einer Befehlskette zu konfigurieren während die umfangreichen Rechenoperationen in der zweiten Steuereinheit cloud-basiert stattfinden. Eine solche cloud-basierte Lösung erfordert im Vergleich zu einer ausschließlich auf dem Futtermischwagen installierten Steuerung weniger Hardware-Kapazitäten und damit weniger Hardware-Investitionsaufwand.

In einer bevorzugten Ausgestaltung des erfindungsgemäßen Futtermischwagens ist die erste Steuereinheit wenigstens mit einen im Futtermischwagen ausgebildeten ersten Sensor wirkverbunden. Dies kann zum Beispiel ein Amperemeter (Strommeter) sein, um die aktuelle Leistungsabgabe oder -Aufnahme eines Aggregates zu ermitteln. Ein solcher Strommeter kann in eine digitale Messeinrichtung und/oder in ein intelligentes Messsystem (Smart Meter) und ein damit verbundenes Kommunikationsnetzwerk eingebunden sein. Unter einem Smart Meter wird jede Art von Zähler verstanden, die Kommuniziert, also Daten sendet und empfängt.

Es sind weitere Sensoren denkbar, beispielsweise ein Wiegesystem zur Ermittlung von Futterkomponenten- oder Futtergesamt-Gewichtsdaten. Die ermittelten Sensordaten können der zweiten Steuerungseinheit zur Verfügung gestellt werden.

Die genannten Strommeter ermöglichen die Ermittlung des Energieverbrauchs aus dem Speicher (der Batterie). Insbesondere kann vorgesehen sein, dass mehrere Strommeter zur Ermittlung des Energieverbrauchs jeweils einzelner Antriebsmodule vorgesehen sind. Entsprechende Strommeter können z.B. in einer Power Distribution Unit (PDU) oder den Invertern integriert oder als "Stand-Alone-Lösung" im Leitungsnetz verortet sein.

Unter einer PDU wird eine Stromverteilungseinheit verstanden. Eine Stromverteilungseinheit verteilt den von einem Versorger oder einer Versorgungseinheit zur Verfügung gestellten Strom auf mehrere Abnehmer. In ihrer Grundform kann eine PDU mehrere Stromversorgungssteckdosen umfassen, an welchen die verschiedene Verbraucher angeschlossen werden können. Darüber hinaus bieten einige Modelle zudem diverse zusätzliche Funktionen, wie z. B. einen Überspannungsschutz, wie er auch bei höherwertigen Mehrfachsteckdosen eingesetzt wird, oder die Fernsteuerbarkeit der einzelnen Steckdosen. Über eine solche Fernsteuerbarkeit können beispielsweise einzelne Verbraucher bedarfsgerecht direkt aus- und eingeschaltet werden. Außerdem können Zeitsteuerungen oder auch andere Schaltabfolgen wie eine Ausfallsteuerung ("Watchdog-Funktion") realisiert werden. Weiterhin sind über die PDU diverse Informationen und Messwerte abrufbar, wie z. B. der elektrische Energieverbrauch pro einzelnem Verbraucher. Zusätzlich können Alarmfunktionen mittels eines Protokolls, beispielsweise eines SNMP (Simple Network Management Protocol) oder einer E-Mail eingestellt werden. SMNP Ist ein Netzwerkprotokoll, welches den Aufbau von Datenpaketen, die gesendet werden können und den Kommunikationsablauf beschreibt. Das SMNP ist so ausgelegt, dass jedes netzwerkfähige Gerät mit in die Überwachung aufgenommen werden kann. Die Kommunikation unter Nutzung dieses Netzwerkprotokolls ermöglicht die Überwachung, Fernsteuerung und Fernkonfiguration von Komponenten sowie die Fehlererkennung und Fehlerbenachrichtigung. Beispielsweise lassen sich bei einer Schwellenwertüberschreitung automatisch Nachrichten abzusetzen.

Auf Basis solcher Daten lassen sich Leistungsdaten, beispielsweise der Energieverbrauch pro einer Tonne Futtergewicht oder Energieverbrauch für die zurückgelegte Fahrstrecke eines Zyklus errechnen.

Bei den extern vom Futtermischwagen installierten Sensoren kann es sich um Sensoren zur Bestimmung der Futterqualität, beispielsweise Futter-Feuchtigkeitssensoren oder NIR-Sensoren oder um in ein Melksystem integrierten Sensoren zur Ermittlung einer Milchmenge pro Tag handeln.

Weiterhin kann es sich bei den außerhalb des Futtermischwagens angeordneten Sensoren beispielsweise um Wetter-Sensoren handeln, die Wetterdaten liefern. Diese Wetterdaten können über die bereits weiter oben genannte Cloud abgerufen und in der zweiten Steuereinheit verarbeitet werden. Da sich ein Energiespeicher, wie eine Batterie, bei niedrigen Temperaturen anders verhält als bei höheren Temperaturen, beeinflussen die beim Betrieb des Futtermischwagens vorliegenden Wetterdaten die Erhaltung des Ladezustandes der Batterie. Die Wetterdaten können deshalb einen Parameter darstellen, der in die Ermittlung der Steuerbefehle und die Optimierung des Gesamtsystems einbezogen werden kann.

Im Ergebnis tragen die auf Basis der Futtermischwagen-intern, Futtermischwagen-extern und cloud-basiert ermittelten Sensor-Daten und deren Auswertung und Einbeziehung in Steuerbefehle dazu bei, Erträge, beispielsweise Milch-Erträge, zu optimieren und Kosten, beispielsweise Energiekosten, zu reduzieren.

In einer weiteren Ausgestaltung des erfindungsgemäßen Futtermischwagens ist das Steuerungssystem zur Erfassung von Betriebsparametern ausgebildet, so dass auf einfache Weise das Betriebsprofil des Futtermischwagens an unterschiedliche Betriebsbedingungen angepasst werden kann. Beispielsweise ist es möglich, die Entfernungen zu ermitteln, die der Futtermischwagen während eines Arbeitszyklusses zu fahren hat. Auf Basis der ermittelten Entfernungen lässt sich der für den Arbeitszyklus erforderliche Energiebedarf für die Fahrstrecken ermitteln. Sind die Entfernungen gering, kann ein größerer Teil der Energiereserven für andere Arbeiten bzw. Verbraucher zur Verfügung gestellt werden. Sind die Fahrstrecken groß, muss ein hierdurch bedingt größerer Energieanteil für die Fahrbewegungen reserviert werden.

In einer weiteren Ausgestaltung des erfindungsgemäßen Futtermischwagens ist das Steuerungssystem zur kontaktlosen Kommunikation der ersten Steuereinheit mit der zweiten Steuereinheit und vice versa ausgebildet. Somit kann drahtlos ein Datenaustausch zwischen der ersten Steuereinheit und der zweiten Steuereinheit realisiert werden. Insbesondere kann die zweite Steuereinheit eine Recheneinheit aufweisen, welche zur kontaktlosen Kommunikation ausgebildet ist. Bei der kontaktlosen Kommunikation kann es sich beispielsweise um eine Funkübertragung handeln. Eine kontaktlosen Kommunikation ist wesentlich praxistauglicher als eine kabel-basierten Kommunikation, bei welcher der Futtermischwagen beispielsweise über ein Netzwerkkabel an das Internet angeschlossen ist.

In einer bevorzugten Ausführung ist das Steuerungssystem zur Kommunikation mit Hilfe einer Cloud ausgebildet. Die Einbeziehung der über eine Cloud verfügbaren Rechenkapazitäten ermöglicht die Durchführung umfangreicher Algorithmen. Weiterhin lässt sich hiermit eine Verbindung zu externen Diensten, wie einer Wetterstation oder zu extern vom Futtermischwagen vorhandenen Maschinendaten herstellen.

Die für das Steuerungssystem vorgesehene Cloud kann der zweiten Steuereinheit zugeordnet sein. Zwar können die zuvor genannten Aspekte auch durch einen einzelnen PC abgebildet werden, welcher mit der ersten Steuereinheit kommuniziert. Dies ist aber nicht praxistauglich, weil sehr erhebliche Rechenressourcen bereitzustellen wären und zudem ein erhöhtes Ausfallrisiko bestünde, da bei Ausfall des genannten einzelnen PC's die Gefahr eines Gesamtausfall des Futtermischwagens bestünde.

Die Cloud kann somit faktisch als die zweite Steuereinheit fungieren. In ihr laufen alle Daten zusammen. Der Futtermischwagenbediener und/oder der Eigentümer haben (Fern-)Zugriff auf alle Daten. Externe Dienste sind einbeziehbar und liefern einen Mehrwert für den Bediener bzw. Eigentümer. Der Futtermischwagen und dessen Steuerung können eine Funktion als ausführendes Organ übernehmen.

Die erfindungsgemäße Aufgabe wird auch durch ein Verfahren zum Betreiben eines Futtermischwagens gelöst, mit dessen Hilfe ein vordefiniertes Betriebsprofil zum Betreiben des Futtermischwagen angewendet wird und/oder ein individuelles Betriebsprofil des Futtermischwagens durch Einsatz künstlicher Intelligenz erfasst und optimiert wird.

Unter einem Betriebsprofil werden die Arbeiten eines oder mehrerer Arbeitszyklen eines Futtermischwagens von der Entnahme von Futter aus einem Futterlager bis zur Futtervorlage, also der Bereitstellung des Futters für die zu fütternden Tiere, verstanden. Unter einem individuellen Betriebsprofil wird ein Betriebsprofil verstanden, welches die individuellen Randbedingungen eines landwirtschaftlichen Betriebes, beispielsweise die Position der Futterlager und Stalleinrichtungen, die Anzahl der zu fütternden Tiere und/oder Tiergruppen, die vorgesehenen Futterrezepturen etc. einbezieht.

Ein zur Durchführung des erfindungsgemäßen Verfahrens vorgesehener Futtermischwagen umfasst folgende Komponenten:
- einen Antriebsstrang mit einem Antriebsaggregat,
- ein Fahrgestell mit einer Radaufhängung,
- ein Vorratsbehälter mit einem Verbraucher in Form einer Mischeinrichtung zur Verarbeitung eines oder mehrerer in den Vorratsbehälter eingefüllten Futtermittels, und
- ein Steuerungssystem zum Betreiben des Futtermischwagens mit einer ersten Steuereinheit.

Wie weiter oben bereits erläutert umfasst der Futtermischwagen zudem eine Batterie oder ein Batteriesystem zur Speicherung elektrischer Energie.

Das erfindungsgemäße Verfahren ist zur Herbeiführung eines optimierten Energieverbrauchs des Futtermischwagens ausgebildet, wobei das Steuerungssystem zur Erfassung und Ermittlung eines Betriebsprofils eines Betriebes ausgebildet ist. Das heißt mit anderen Worten, dass mit Hilfe des Steuerungssystems die Möglichkeit besteht, das Betriebsprofil in Abhängigkeit von regelmäßigen, somit wiederkehrenden Betriebsmustern auszubilden. Das heißt, dass ein vorgegebenes Betriebsprofil aktuellen Betriebsbedingungen angepasst werden oder zumindest ermittelt werden kann und in einem folgenden Betrieb des Futtermischwagens eingesetzt werden kann.

Übliche Futtermischwägen werden intermittierend während einer Arbeitszeit verwendet und weisen bestimmte wiederkehrende Betriebszyklen auf. Da sich bei den Betriebszyklen regelmäßige Muster von Betriebszyklen und Energieverbrauch erkennen lassen, ist es mit dem erfindungsgemäßen Verfahren möglich, den Energieverbrauch aus nicht erneuerbaren Energien, wie sie das erste Antriebsmodul in Form der Verbrennungskraftmaschine benötigt, zu minimieren. Dies bedeutet, dass es mit Hilfe des erfindungsgemäßen Verfahrens möglich ist, ein sich aus dem Nutzungsverhalten des Futtermischwagen-Anwenders ergebendes Betriebsprofil zu analysieren und in die Steuerung des Futtermischwagens einzubeziehen. Auf dieser Basis lässt sich eine verbesserte Nutzung des Energiespeichers realisieren. Dadurch kann ein Energieverbrauch des Futtermischwagens wesentlich reduziert und optimiert werden.

Insbesondere ist das Steuerungssystem in Form eines Kl-Systems oder ein KI-System umfassend ausgebildet. Unter einem KI-System wird ein System verstanden, welches künstliche Intelligenz (KI) in den Betrieb des Gesamtsystem integriert. Unter künstlicher Intelligenz wird insbesondere die Nachbildung von Entscheidungsstrukturen zur Bearbeitung eigenständiger Probleme verstanden. Bei den zu lösenden Problemen kann es sich beispielsweise um Optimierung des Energieverbrauches während eines Betriebszyklusses und/oder die Abstimmung einer Mehrzahl von Betriebszyklen aufeinander handeln. Im Ergebnis ermöglicht die Einbeziehung eines Kl-Systems das Betriebsprofil des Futtermischwagens "selbstlernend" anzupassen.

In einer Ausgestaltung des erfindungsgemäßen Verfahrens verwendet das Steuerungssystem zur Ableitung des Betriebsprofils On-Board-Rechenressourcen und/oder Off-Board-Rechenressourcen.

In einer weiteren Ausgestaltung des erfindungsgemäßen Verfahrens ist es möglich, den Betrieb der Futtermischwagen-Verbraucher an das Betriebsprofil anzupassen bzw. mit Hilfe des Steuerungssystems und/oder manuell zu verändern. Dabei wird ein individuell am Einsatzort vorliegendes Betriebsprofil als gegebener Ist-Stand berücksichtigt. Auf Basis des Ist-Standes werden durch den Arbeitseinsatz des Futtermischwagens zu realisierende Solldaten errechnet. Zur Realisation der Soll-Zieldaten, das heißt, für die Art und Weise, wie der Futtermischwagen ausgehend von den Ist-Daten die Soll-Zieldaten erreicht, können unterschiedliche Wege in Betracht kommen. Relevant ist insofern beispielweise, welche Leistung und welche Energiereserven (Batterieladungszustand) zu einem Zeitpunkt X im Betriebsprofil zur Verfügung stehen muss. Daraus lässt sich beispielsweise ein Lastprofil für das erste und/oder zweite Antriebsmodul (An - Aus - Volllast - Teillast) ableiten. Weiterhin lässt sich ermitteln, wann der Leistungsbedarf zur Versorgung der Futtermischwagen-Verbraucher so groß ist, dass das erste Antriebsmodul (Verbrennungsmotor) zugeschaltet werden muss und wann der Leistungsbedarf für das zweite Antriebsmodul (E-Motor) ausreichend klein bzw. die Energiereserven der Batterie ausreichend groß sind, um den Futtermischwagen ausschließlich mit dem zweiten Antriebsmodul anzutreiben.

Das heißt mit anderen Worten, dass das Antriebsaggregat, beziehungsweise der Einsatz der beiden Antriebsmodule des Antriebsaggregats, mit Hilfe des Steuerungssystems, beispielsweise mit Hilfe eines KI-Programmes und/oder durch manuelle Eingabe eines Bedieners des Futtermischwagens, an das Betriebsprofil angepasst werden kann.

In einer weiteren Ausgestaltung des erfindungsgemäßen Verfahrens umfasst das Antriebsaggregat, welches ein erstes Antriebsmodul in Form einer Verbrennungskraftmaschine und ein zweites Antriebsmodul in Form wenigstens eines Elektromotors aufweist, ein Betriebsprofil mit einen ersten Betriebsbereich des ersten Antriebsmoduls zur Speisung des Energiespeicher und einen zweiten Betriebsbereich zum Betreiben des zweiten Antriebsmoduls mit Hilfe des Energiespeichers. Das erste und das zweite Antriebsmodul sind wirkverbunden ausgebildet, wobei zum Betreiben des zweiten Antriebsmoduls ein Energiespeicher vorgesehen ist, welcher mit Hilfe eines mit dem ersten Antriebsmodul wirkverbundenen Generators mit Energie gespeist wird. Somit könnte beispielsweise vorteilhaft die Nutzung nicht erneuerbarer Energien zur Aufrechterhaltung eines Ladezustands des Energiespeichers dienen.

Weitere, die Erfindung verbessernde Maßnahmen, werden nachstehend mit der Beschreibung von bevorzugten Ausführungsbeispielen der Erfindung anhand der Figuren näher dargestellt.

### Die Figuren zeigen:

- Fig. 1: zeigt einen erfindungsgemäßen Futtermischwagen in einer perspektivischen Darstellung,
- Fig. 2: zeigt den Futtermischwagen gemäß Fig. 1,
- Fig. 3: zeigt in einer Draufsicht eine Hofstelle, welche mit Hilfe des erfindungsgemäßen Futtermischwagens betrieben wird,
- Fig. 4: zeigt in einer Prinzipdarstellung ein Blockschaltbild zur Implementierung eines Cloud-basierten Steuerungssystems, sowie On-Board-Sensoren wie Strommeter
- Fig. 5: zeigt in einem Diagramm ein Betriebsprofil des Futtermischwagens mit einer ersten Profilkurve, eine Kumulation sämtlicher Verbraucher des Futtermischwagens, und einer zweiten Profilkurve eines einzelnen Verbrauchers,
- Fig. 6: zeigt in einer Blockdarstellung den erfindungsgemäßen Futtermischwagen, und
- Fig. 7: zeigt in einer Prinzipdarstellung einen Ausschnitt des Steuerungssystems des erfindungsgemäßen Futtermischwagens.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

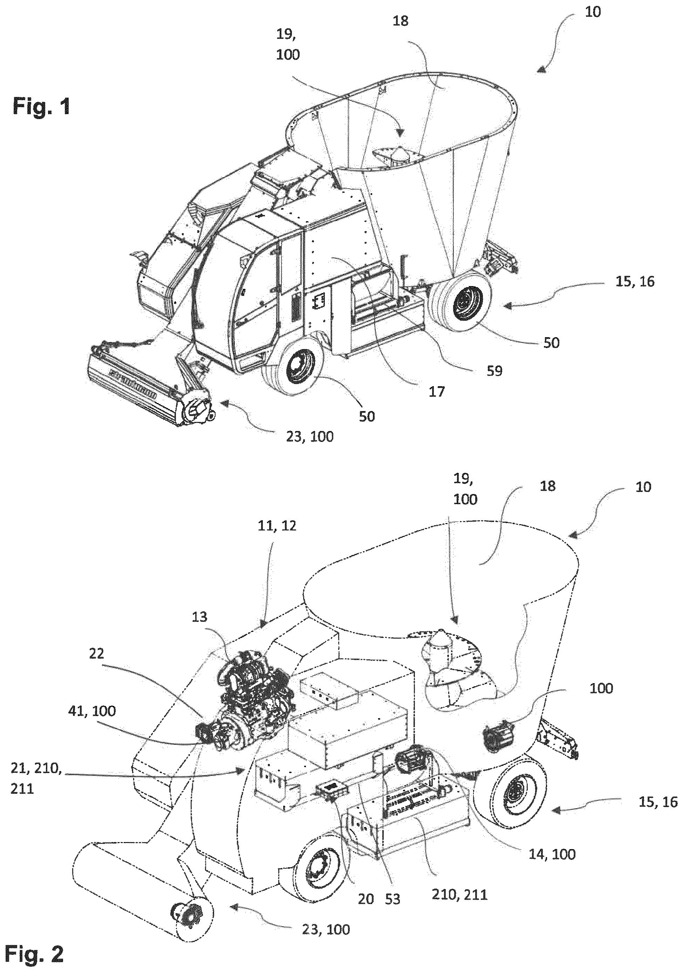

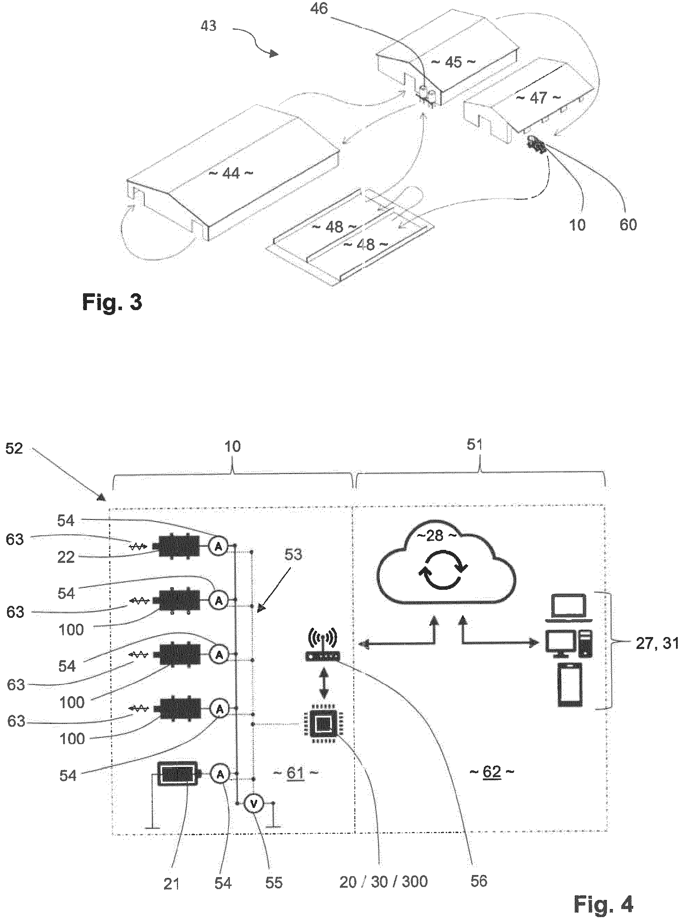

Ein erfindungsgemäßer Futtermischwagen 10, insbesondere ein selbstfahrender Futtermischwagen 10, ist gemäß den Figuren 1 und 2 ausgebildet. Er umfasst einen Antriebsstrang 11 mit einem Antriebsaggregat 12 und einem nicht näher abgebildeten Getriebe. Das Antriebsaggregat 12 ist mit einem Fahrgestell 15 des Futtermischwagens 10 wirkverbunden. Das Fahrgestell 15 umfasst eine Radaufhängung 16 mit daran angebrachten Rädern 50. Der Futtermischwagen 10 ist für den Einsatz auf einer beispielhaft in Fig. 3 abgebildete Hofstelle 43 dazu vorgesehen, Futtermittel aus Vorratslagern, beispielsweise Fahrsilos 48 und Hochsilos 46 aufzunehmen, zu mischen und auszubringen.

Die beispielhafte Hofstelle 43 umfasst einen ersten Stall 44 und einen zweiten Stall 45, in welchen sich Vieh, insbesondere Kühe aufhalten und mittels des Futtermischwagens 10 gefüttert werden. Selbstredend könnte die Hofstelle 43 auch einen anderen Aufbau aufweisen. Am zweiten Stall 45 sind die Hochsilos 46 außen angeordnet. Des Weiteren umfasst die Hofstelle 43 eine Maschinenhalle 47, welche zur Unterbringung des Futtermischwagens 10 und möglichen, nicht näher abgebildeten weiteren Maschinen ausgebildet ist. In den Fahrsilos 48 werden insbesondere Futtermittel wie Gras- oder Maissilage gelagert.

Der erfindungsgemäße Futtermischwagen 10 ist zum Einsatz auf der Hofstelle 43 ausgebildet. Der Fig. 3 ist zudem ein mit Pfeildarstellungen veranschaulichter beispielhafter Arbeitszyklus zu entnehmen. Der Futtermischwagen 10 befindet sich zunächst im Bereich der Maschinenhalle 47 in einer Parkposition 60. An der Parkposition 60 befindet sich zudem eine nicht dargestellte Ladestation zum Aufladen des Energiespeichers (Batterie) des Futtermischwagens 10. Bei Inbetriebnahme fährt der Futtermischwagen zunächst zu den Fahrsilos 48 und lädt dort die in den Fahrsilos 48 gelagerten Futterkomponenten in seinen Vorratsbehälter 18. Die Entnahme der im Fahrsilo 48 enthaltenen Futterkomponenten erfolgt mittels einer Entnahmeeinrichtung 23, welche im vorliegenden Ausführungsbeispiel in Form einer Fräse ausgebildet ist, wobei die Fräse, bzw. die Entnahmeeinrichtung 23 einen Verbraucher 100 darstellt. Anschließend fährt der Futtermischwagen 10 zu den Hochsilos 46 und lädt dort weitere Futterkomponenten in den Vorratsbehälter 18. Der Vorratsbehälter 18 umfasst integriert eine Mischeinrichtung 19, bevorzugt in Form einer Mischschnecke, zur Durchmischung und/oder Verarbeitung der Futtermittel. Der so beladene Futtermischwagen 10 durchfährt dann die Ställe 44 und 45 und versorgt das dort untergebrachten Vieh mit Futter. Hierzu wird das im Vorratsbehälter 18 befindliche und vorzugweise zu einer homogenen Futterration vermischte Futter aus dem Vorrastbehälter 18 herausgefördert und dem Vieh auf nicht näher abgebildeten Futtertischen vorgelegt. Nach der Fütterung fährt der Futtermischwagen 10 zurück zu seinem Startpunkt 60 und beendet den Arbeitszyklus.

Grundsätzlich wird der Futtermischwagen im Arbeitseinsatz innerhalb von Gebäuden rein elektrisch angetrieben. In Ausnahmesituation, beispielsweise bei fast oder vollständig entladener Batterie, ist der Antrieb des Futtermischwagens 10 mittels des Verbrennungsmotors unter Einhaltung der insofern relevanten Sicherheits- und Arbeitsschutzanforderungen, nicht ausgeschlossen.

An dieser Stelle sei erwähnt, dass die Mischeinrichtung 19 in Form einer so genannten Vertikal-Mischschnecke oder Horizontal-Mischschnecke ausgebildet sein kann. Ebenso sind Mischhaspeln, umlaufende Ketten oder ähnliches grundsätzlich auch als Mischeinrichtung 19 einsetzbar.

Das Antriebsaggregat 12, welches wirkverbunden mit dem Fahrgestell 15 ausgebildet ist, umfasst ein erstes Antriebsmodul 13 in Form einer Verbrennungskraftmaschine und ein zweites Antriebsmodul 14 in Form eines Elektromotors, wobei das erste Antriebsmodul 13 und das zweite Antriebsmodul 14 wirkverbindbar ausgeführt sind. Im dargestellten Ausführungsbeispiel ist als Verbrennungskraftmaschine ein Dieselmotor vorgesehen.

Das erste Antriebsmodul 13 ist in Verbindung mit einem wirkverbundenen Generator 22 zur Erzeugung von Energie ausgebildet, welche von einem Verbraucher 100 des Futtermischwagen 10 zu dessen Betrieb genutzt wird. Die vom Generator 22 erzeugte Energie und auch aus externen Energiequellen, beispielsweise aus einem Stromnetz oder eine Photovoltaik-Anlage zugeführte Energie, wird in einen Energiespeicher 21 in Form eines Batteriepakets 210 eingebracht und von dem oder den Verbrauchern 100 genutzt. Die Verbraucher 100 können beispielsweise von einem Elektro- oder Hydraulikmotor angetrieben werden. Der Elektromotor 100 wird mittels des vom Generator 22 erzeugten oder in den Batteriepaketen 210 gespeicherten Stroms angetrieben. Der Elektromotor 100 ist mit einem elektrischen Systems 52 des Futtermischwagens 10 und mit dem Energiespeicher 21 wirkverbunden. Es kann mit weiter anderen Worten gesagt werden, dass das erste Antriebsmodul 13 den Generator 22 zur mittelbaren Energieversorgung eines zweiten Antriebsmoduls 14 umfasst.

Soweit das zweite Antriebsmodul 14 von einem Hydraulikmotor angetrieben wird, ist dieser Hydraulikmotor Bestandteil eines nicht dargestellten Hydraulikkreislaufs. Der Hydraulikkreislauf umfasst eine Pumpe 41, die vom ersten Antriebsmodul 13 und/oder mittels des vom Generator 22 oder den Batteriepaketen 210 zur Verfügung gestellten Stroms angetrieben wird.

Ein Verbraucher 100 ist beispielsweise das zweite Antriebsmodul 14, also der Elektromotor, welcher mit dem Energiespeicher 21 wirkverbunden ausgebildet ist. Weitere Verbraucher 100 sind die Entnahmeeinrichtung 23, die Mischeinrichtung 19, ein zur Futterausbringung vorgesehenes Förderband 59 und die Pumpe 41. An dieser Stelle sei erwähnt, dass der Energiespeicher 21 aus mehreren Batteriepaketen 210, umfassend mehrere Batteriezellen 211, ausgebildet sein kann, wobei die Batteriepakete 210 untereinander in Verbindung stehen können. Ebenso können weitere Verbraucher 100 am Futtermischwagen 10 ausgebildet sein, welche hier nicht explizit erwähnt werden. An dieser Stelle sei erwähnt, dass unter dem Begriff Verbraucher grundsätzlich eine Energie benötigende Maschine oder ein Aggregat zu verstehen ist.

Selbstredend kann das zweite Antriebsmodul 14 aus mehreren Elektromotoren ausgebildet sein, welche mit dem Energiespeicher 21 und somit mit dem ersten Antriebsmodul 13 wirkverbunden ausgeführt sind.

Das erste Antriebsmodul 13, das den Verbrennungsmotor umfasst, ist bevorzugt für einen Betrieb des Futtermischwagens 10 außerhalb der Ställe 44, 45 vorgesehen, damit in diesen überwiegend geschlossen ausgeführten Abschnitten der Hofstelle 43 Emissionen des Futtermischwagens 10 zumindest nicht unmittelbar eingebracht werden. Innerhalb der Ställe 44, 45 wird bevorzugt das zweite Antriebsmodul 14 in Form des Elektromotors genutzt. Das heißt mit anderen Worten, dass das Antriebsaggregat 12 des erfindungsgemäßen Futtermischwagens 10 einen Hybridantrieb darstellt, welcher aus der dem ersten Antriebsmodul 13 in Form einer Verbrennungskraftmaschine und dem zweiten Antriebsmodul 14 in Form eines Elektromotor ausgebildet ist.

Im vorliegenden Ausführungsbeispiel des erfindungsgemäßen Futtermischwagens 10 ist die Pumpe 41, welche in Form einer Hydraulikpumpe ausgebildet ist, am ersten Antriebsmodul 13 angeordnet. Es kann vorteilhaft sein, bestimmte, dem Futtermischwagen 10 zuzuordnende Einheiten, wie beispielsweise ein Förderband 59 oder eine Entnahmeeinrichtung 23, nicht elektrisch, sondern hydraulisch anzutreiben. Dies gilt insbesondere für lineare Antriebe (Hydraulikzylinder).

Zum Schutz vor Verunreinigungen oder Wassereintritt sind insbesondere das Antriebsaggregat 12 und der Energiespeicher 21 mit Hilfe einer sogenannten Verkleidung 17 bedeckt.

Der Futtermischwagen 10 umfasst des Weiteren ein Steuerungssystem 26, welches zum vorzugsweise gesteuerten und/oder geregelten Betrieb des Futtermischwagens 10 ausgebildet ist. Dieses Steuerungssystem 26 weist insbesondere eine erste Steuereinheit 20 auf, welche einen unmittelbaren Betrieb des Futtermischwagens 10 steuert und/oder regelt und welche in Wirkverbindung mit einer zweiten Steuereinheit 51 steht, welche für eine Bearbeitung der ersten Steuereinheit 20 ausgebildet ist. Das heißt mit anderen Worten, dass insbesondere mit Hilfe der zweiten Steuereinheit 51 eine Veränderung, eine Korrektur oder eine Manipulation der ersten Steuereinheit 20, insbesondere eines dort abgebildeten Betriebsprofils 29 des Futtermischwagens 10 möglich ist.

Die erste Steuereinheit 20 ist am Futtermischwagen 10 angeordnet und wird zu ihrem Schutz vor Verschmutzung und Nässe ebenfalls mit Hilfe der Verkleidung 17 bedeckt. Bevorzugt ist sie im Bereich des Antriebsaggregats 12 und des Energiespeichers 21 angeordnet. Selbstredend könnte die erste Steuereinheit 20 auch an einer anderen Stelle des Futtermischwagens 10 vorgesehen sein, jedoch kann die abgebildete Stelle als bevorzugt angesehen werden, da Verbindungselemente zwischen dem ersten Antriebsmodul 13 (Verbrennungskraftmaschine), dem zweiten Antriebsmodul 14 (Elektromotor) und den weiteren Verbrauchern 100 zur Anbindung der ersten Steuereinheit 20 an diese relativ kurz ausgebildet werden können. Die erste Steuereinheit 20 ist mit einem durch Stromleitungen gebildeten elektrischen System 53 wirkverbunden ausgebildet.

Die erste Steuereinheit 20 ist zur Koordination des Betriebes des Antriebsaggregates 12 ausgeführt. Ebenso kann mit ihrer Hilfe die Mischeinrichtung 19 betrieben werden. Mit Hilfe der ersten Steuereinheit 20 können auch die weiteren, und nicht näher abgebildeten Verbraucher 100, welche dem Futtermischwagen 10 zugeordnet sind, betrieben werden, wie beispielsweise die Entnahmeeinrichtung 23, beispielsweise in Form der Fräse oder eines sogenannten Schneidschilds.

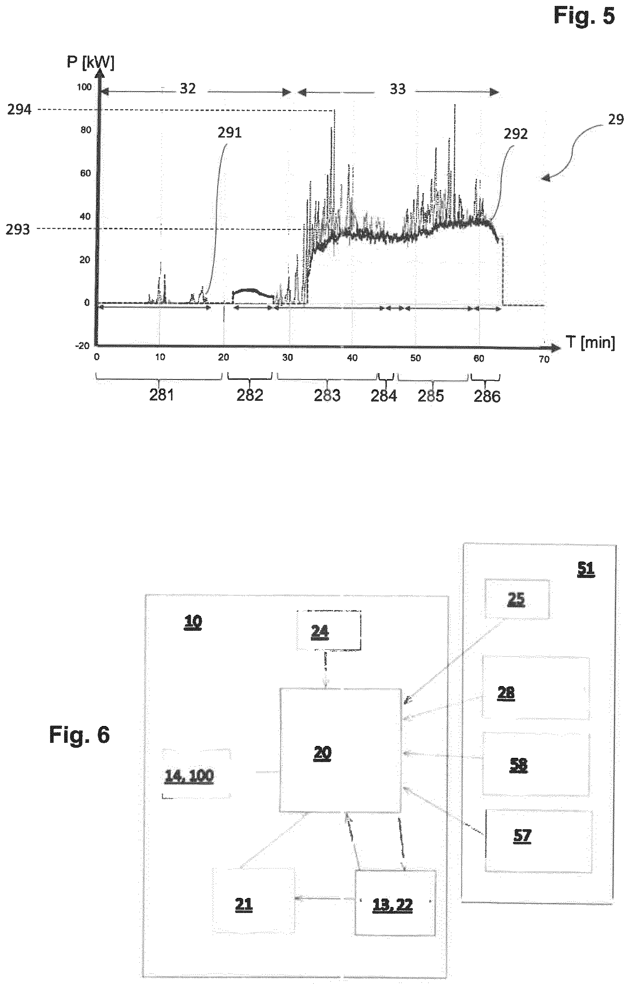

In Fig. 6 ist in einer Blockdarstellung der erfindungsgemäße Futtermischwagens 10 abgebildet. Die zweite Steuereinheit 51 ist mit der ersten Steuereinheit 20 kommunizierend ausgebildet. Die zweite Steuereinheit 51 ist im vorliegenden Ausführungsbeispiel vollständig außerhalb des Futtermischwagens 10 ausgebildet. Sie könnte ebenso auch teilweise im Futtermischwagen 10 vorliegen.

Die erste Steuereinheit 20 weist einen ersten Sensor 24 auf, welcher mit zumindest einem außerhalb des Futtermischwagens 10 ausgebildeten zweiten Sensor 25, welcher der zweiten Steuereinheit 52 zugeordnet ist, wirkverbunden ausgebildet ist. Ebenso könnte beispielsweise der zweite Sensor 25 auch im Futtermischwagen 10 angeordnet sein und mit einem weiteren, nicht näher abgebildeten Sensor der zweiten Steuereinheit 52 kommunizierend ausgebildet sein. Damit läge die zweite Steuereinheit 52 nur teilweise außerhalb des Futtermischwagens 10.

Das Steuerungssystem 26 ist im dargestellten Ausführungsbeispiel zur kontaktlosen Kommunikation der ersten Steuereinheit 20 mit der zweiten Steuereinheit 51, und selbstredend auch umgekehrt, ausgebildet. Das heißt mit anderen Worten, dass die beiden Steuereinheiten 20, 51 nicht mit Hilfe eines die beiden Steuereinheiten 20, 51 zur Kommunikation verbindenden Kabels, sondern drahtlos, beispielsweise mit Hilfe von Funktechnik in Form einer WLAN-Verbindung kommunizierend ausgebildet sind.

Fig. 4 zeigt in einer Prinzipdarstellung den erfindungsgemäße Futtermischwagen 10 in Verbindung mit der extern zum Futtermischwagen 10 angeordneten zweiten Steuereinheit 51. Zur besseren Veranschaulichungen sind in Fig. 4 die Komponenten des Futtermischwagens 10 und der zweiten Steuereinheit 51 in zwei durch Strichpunktlinien voneinander abgegrenzten Blöcken 61 und 62 dargestellt. Zwischen den Blöcken 61 und 62 ist eine Strichlinie eingezeichnet, welche die Systemgrenze des hybriden Futtermischwagens 10 zu einem Bereich außerhalb des Futtermischwagens verdeutlicht.

Im dargestellten Ausführungsbeispiel umfasst der Futtermischwagen 10:
- einen Energiespeicher 21 in Form einer Batterie oder eines Batteriepaketes,
- drei Verbraucher 100 in Form von Elektromotoren zum Antrieb verschiedener Arbeitswerkzeuge des Futtermischwagens, wie Entnahmeeinrichtung, Mischeinrichtung, Fahrantrieb etc. und
- einen Generator 22, der an einen Verbrennungsmotor (in Fig. 4 nicht dargestellt) gekoppelt ist.

Neben dem Generator 22 beziehungsweise den Verbrauchern 100 ist in Fig. 4 die Leistungsaufnahme/Leistungsabgabe dieser Komponenten mit Wirkpfeilen 63 angedeutet: Bei dem Generator 22 weist der genannte Wirkpfeil 63 in Richtung Generator 22 und verdeutlicht damit dessen Leistungsaufnahme. Dahingegen weisen die den Verbrauchern 100 zugeordneten Wirkpfeile 63 von diesen weg und verdeutlichen somit deren Leistungsabgabe.

Selbstredend könnten nicht nur drei Verbraucher 100, sondern zusätzliche weitere Verbraucher 100 mit dem Energiespeicher 21 wirkverbunden sein. Der Energiespeicher 21, die Verbraucher 100 sowie der Generator 22 umfassen jeweils ein Strommessgerät in Form eines Amperemeters, die nachfolgend als Strommeter 54 bezeichnet sind. Die Strommeter 54 sind zur Bestimmung des Energieverbrauchs der Verbraucher 100 vorgesehen. Mittels eines Spannungssensors 55 kann die Bordspannung des Futtermischwagens 10 bestimmt werden.

Die genannten Komponenten sind an die Maschinensteuerung gekoppelt, die durch die erste Steuereinheit 20 gebildet wird. Mittels eines Kommunikationsgerätes 56, bei dem es sich im dargestellten Ausführungsbeispiel um ein Modem handelt, wird über eine Cloud 28 eine drahtlose Kommunikation zu den Komponenten der zweiten Steuereinheit 51, insbesondere einer Recheneinheit 27 und Rechenressourcen 31 ermöglicht.

Die erste Steuereinheit 20 umfasst ferner eine sogenannte Onboard-Rechenressource 30 zur Bestimmung und Auswertung von Betriebsdaten des Futtermischwagens 10. Diese Onboard-Rechenressource 30 berechnet mit Hilfe eines entsprechenden Rechenprogrammes 300 einen aktuellen Leistungsbedarf der Verbraucher 100 basierend auf einem mit Hilfe des Strommeters 54 bestimmten Stromwert und einem mit Hilfe des Spannungssensors 55 ermittelten Spannungswert. Die Onboard-Rechenressource 30 korreliert mit Hilfe dieser Werte den aktuellen Leistungsbedarf mit einer aktuellen Tageszeit. Daraufhin wird der Betrieb des Antriebsaggregates 12 gesteuert, so dass in Abhängigkeit von dem aktuellen Leistungsbedarf des ersten Antriebsmoduls 13 (Verbrennungskraftmaschine) und/oder das zweite Antriebsmodul 14 (Elektromotor) zur Bewegung des Futtermischwagens 10 eingesetzt wird, und/oder das erste Antriebsmodul 13 (Verbrennungskraftmaschine) zur Einspeisung von Energie in den Energiespeicher 21 den Generator 22 betreibt.

Über die Onboard-Rechenressource 30 ist somit auch eine Ermittlung eines jeweils aktuellen Status im Fütterungsprozess möglich. Daten wie die aktuell zu fütternde Rezeptur, die Anzahl der Futterstellen, das aktuelle Gewicht der im Vorratsbehälter befindlichen Futtermasse, aber auch Tagesszeit und Positionsdaten ermöglichen es der Rechenressource 30 einerseits zu ermitteln, an welcher Stelle eines Fütterungszyklusses sich das System aktuell befindet, wieviel Antriebsenergie bereits verbraucht ist, wie groß der aktuelle Energievorrat ist und wie viel Energie bzw. Energiereserven noch benötigt wird.

Der zweiten Steuereinheit 51 ist die Recheneinheit 27 in Form eines Computers zugeordnet. Bei dem Computer kann es sich um einen beliebigen Rechner handeln, beispielsweise um einen PC, ein Notebook, einen Tabletcomputer oder ein Smartphone. Die Recheneinheit 27 ist zur Verarbeitung, somit zur Erfassung und Wiedergabe von Daten der ersten Steuereinheit 20 und der unmittelbar der zweiten Steuereinheit 51 zugeführten Daten vorgesehen und ausgebildet. Das heißt mit anderen Worten, dass die Recheneinheit 27 zur Berechnung eines Energiebedarfs des Futtermischwagens 10, zur Überwachung dessen Betriebs anhand eines definierten Betriebsprofils 29 und zur Erleichterung einer Kommunikation von Cloud-basierte Computing- und Datenanalysedienste vorgesehen ist.

Die Recheneinheit 27 ist zur Kommunikation mit der Cloud 28 ausgebildet, wobei die erste Steuereinheit 20 und/oder die zweite Steuereinheit 51 ein Kommunikationsgerät 56, beispielsweise in Form eines Modems, aufweist, um die Kommunikation zwischen der Maschine und Cloud-basierten Computerdiensten zu erleichtern. Weiterhin kann eine Kommunikation mit Websystemen vorgesehen sein, wobei die Websysteme vorzugsweise in der Lage sind, Daten zu speichern und zu pflegen und bei Bedarf in das Steuerungssystem 26 zu interagieren.

Das heißt mit anderen Worten, dass die zweite Steuereinheit 51 die Recheneinheit 27 und die Cloud 28 aufweist, welche zur kontaktlosen Kommunikation ausgebildet ist. Die zweite Steuereinheit 51 besitzt somit eine Offboard-Rechenressource 31. Mit anderen Worten gesagt, ist das Steuerungssystem 26 zur Kommunikation mit Hilfe der Cloud 28 ausgebildet, welche der zweiten Steuereinheit 51 zugeordnet ist.

Ebenso könnte die Recheneinheit 27 den aktuellen Leistungsbedarf des Futtermischwagens 10, basierend auf dem Stromwert und dem Spannungswert, die ihm mit Hilfe des Kommunikationsgerätes 56 und der Cloud 28 zur Verfügung gestellt werden, ermitteln. Daraufhin könnte mit Hilfe der Recheneinheit 27 ein momentaner Leistungsbedarf des Futtermischwagens 10 mit einer aktuellen Tageszeit auf Korrelation geprüft werden. Die Recheneinheit 27 kommuniziert dann kontaktlos mit der ersten Steuereinheit 20, wobei der Betrieb des Antriebsaggregates 12 bestimmt wird. Das heißt mit anderen Worten, dass in Abhängigkeit des Betriebsprofils, das erste Antriebsmodul (Verbrennungskraftmaschine) und/oder das zweite Antriebsmodul 14 (Elektromotor) 14 zur Bewegung des Futtermischwagens 10 eingesetzt wird. Das heißt mit anderen Worten, dass mit Hilfe der Recheneinheit 27 der Betrieb des Antriebsaggregates 12 so gesteuert wird, dass vom Antriebsaggregat 12 nur eine aktuell benötigte Leistung gemäß dem gewünschten Profil zur Verfügung gestellt wird. Die Recheneinheit 27 kommuniziert mit Servern in einem öffentlichen Netz und tauscht bei Bedarf Daten aus, um den Energieverbrauch des Futtermischwagens 10 zu optimieren.

Das Betriebsprofil 29 des Futtermischwagens 10, welches beispielhaft in Fig, 5 abgebildet ist, ist in Form eines Datensatzes kodiert, wobei regelmäßigen Aktivitäten und dafür aufzuwendende Energien korrelieren bzw. korrelieren sollten. Das Betriebsprofil 29 kann manuell oder automatisiert aktualisiert werden. Die manuelle Aktualisierung erfordert einen Zugriff, oder mit anderen Worten einen Zugang zur Datenbank. Die automatisierte Aktualisierung erfolgt durch automatisierte Erkennung von Änderungen im Betrieb des Futtermischwagens 10, dessen Profil sich vom gespeicherten Betriebsprofil 29 unterscheidet. Hier kann im einfachsten Falle ein im Steuerungssystem 26 programmiert ausgebildeter Vergleich von Soll-Ist-Werten des Betriebsprofils 29 Änderungen für das Betriebsprofil 29 durchführen. Oder es werden mit Hilfe eines externen Systems 57 Änderungen durchgeführt, das mit dem Steuerungssystem 26 interagiert und Informationen liefert, welche sich auf den Energieverbrauch des Futtermischwagens 10 auswirken können. Änderungen können beispielsweise Änderungen an einem Futterrezept, der Anzahl der zu fütternden Tiere oder Änderungen einer Betriebsumgebung des Futtermischwagens 10 aufgrund von Änderungen der klimatischen Bedingungen sein.

Die automatisierten Änderungen erfolgen vorteilhaft mit Hilfe eines so genannten KI-Systems (Künstliche-Intelligenz-Systems), welches dem Steuerungssystem 26 zugeordnet ist. Das heißt mit anderen Worten, dass das Steuerungssystem 26 das KI-System umfassend ausgebildet ist. An dieser Stelle sei erwähnt, dass das KI-System ein weiteres Rechenprogramm ist, welches das Rechenprogramm 300 intergiert aufweisen kann. Oder mit anderen Worten gesagt, es weist das weitere Rechenprogramm das Rechenprogramm 300 mit seinen dem weiteren Rechenprogramm angepasste Regeln und Algorithmen ausgebildet auf.

Die benötigten, beispielsweise vordefinierten und/oder von Sensoren, wie beispielsweise den Sensoren 54, 55, ermittelten Werte können in der On-Board-Rechenressource 30 und/oder der Off-Board-Rechenressource 31 und/oder in einem so genannten webbasierten System gespeichert sein. Ob diese Werte sehr statisch oder hochdynamisch sind, hängt von den Betriebseigenschaften der einzelnen Maschine ab.

Das hier vorgeschlagene System bietet unabhängig von der Häufigkeit der Datenaktualisierungen eine Lösung.

Somit kann der Futtermischwagen 10, insbesondere das Antriebsaggregat 12 mit Hilfe des Steuerungssystems 26 so betrieben werden, dass der Energiebedarf der Verbraucher 100 gedeckt wird und der Generator 22 auf seinem effizientesten Niveau arbeitet.

In Fig. 5 ist beispielhaft das Betriebsprofil 29 des Futtermischwagens 10 abgebildet, wobei eine erste Profilkurve 291 das Betriebsprofil 29 sämtlicher Verbraucher 100 in benötigter Leistung (Calculated Power P in [kw]) über der Zeit (Time t in [min]) abbildet. Eine zweite Profilkurve 292 illustriert ein Betriebsprofil der Mischeinrichtung 19, wobei anlog zur Profilkurve 291 die benötigte Leistung über die Zeit dargestellt ist.

In einer ersten Betriebsphase 281 fährt der Futtermischwagen zur ersten Futterlagerstelle und entnimmt dort mittels der am Futtermischwagen 10 angebrachten Entnahmevorrichtung 23 eine durch vordefinierte Menge an Futter. Die Lastspitzen in dieser Betriebsphase 281 betragen ca. 16 kW. In einer zweiten Betriebsphase 282 wird das in den Vorratsbehälter 18 eingefüllte Futter gemischt. In einer dritte Betriebsphase 283 wird weiteres Futter entnommen und in den Vorratsbehälter 18 eingefüllt. Es ist zu erkennen, dass in dieser dritten Betriebsphase 283 die Mischeinrichtung 19 erst nach dem auf der X-Achse dargestellten Zeitwert von ca. 33 Minuten aktiviert wird. Sobald die Mischeinrichtung 19 aktiviert ist kumuliert sich der Leistungsbedarf der Mischeinrichtung 19 mit dem Leistungsbedarf der übrigen Verbraucher. Der Leistungsbedarf der Mischeinrichtung liegt bei einem Wert von ca. 35 kW. Kumuliert mit dem Leistungsbedarf der übrigen Verbraucher ergeben sich Leistungsbedarfsspitzen in der Größenordnung eines Wertes 294 von ca. 90 kW. In einer vierten Betriebsphase 284 fährt der Futtermischwagen 10 zu einer weiteren Entnahmestelle während die Mischeinrichtung 19 weiterhin aktiv ist. Während dieser vierten Betriebsphase 284 bildet somit der Leistungsbedarf der Mischeinrichtung 19 den wesentlichen Anteil des Gesamtleistungsbedarfes des Futtermischwagens 10. Analog zur dritten Betriebsphase 283 erfolgt dann in einer fünften Betriebsphase 285 eine erneute Futterentnahme bei gleichzeitigem Mischen des Futters. Es ist zu erkennen, dass der Leistungsbedarf der Mischeinrichtung 19 in der fünften Betriebsphase 285 etwas höher ist als in der dritten Betriebsphase 283. Der Grund hierfür ist, dass die zwischenzeitlich angewachsene Futtermenge im Vorratsbehälter 18 für das Mischen zusätzliche Mischleistung erfordert. In einer sechsten Betriebsphase 286 ist die Mischeinrichtung 19 weiterhin aktiv und gleichzeitig wird das im Vorratsbehälter 18 befindliche Futter ausgebracht und den zu fütternden Tieren vorgelegt.

Es kann festgestellt werden, dass zum Betrieb des Futtermischwagen in einem ersten Betriebsbereich 32 (Betriebsphasen 281 und 282) ein sehr geringer Leistungsbedarf erforderlich ist. In einem zweiten Betriebsbereich 33 (Betriebsphasen 283 bis 286) ist der Leistungsbedarf stark angestiegen.

In Fig. 6 ist in einer Blockdarstellung der erfindungsgemäße Futtermischwagen 10 abgebildet. Es kommunizieren mit der ersten Steuereinheit 20 die Verbraucher 100, welche von der ersten Steuereinheit 20 gemäß dem ermittelten Betriebsprofil 29 angesteuert werden. Des Weiteren kommuniziert der Energiespeicher 21 mit der ersten Steuereinheit 20 dahingehend, dass sein Ladezustand der ersten Steuereinheit 20 zugeführt werden kann. Sensoren, beispielsweise der erste Sensor 24 an dem Futtermischwagen 10, kommunizieren ebenfalls mit der ersten Steuereinheit 20. Der ersten Steuereinheit 20 wird ebenso eine am ersten Antriebsmodul 13 anliegende Last übermittelt. In Abhängigkeit vom Ladezustand des Energiespeichers 21 steht er in Wirkverbindung mit dem ersten Antriebsmodul 13 oder nicht. Das heißt mit anderen Worten, dass zur Energieaufnahme von mit Hilfe des ersten Antriebsmoduls 13 bereitgestellter Energie die Wirkverbindung ausgebildet ist.

Des Weiteren kommuniziert die erste Steuereinheit 20 mit dem zweiten Sensor 25, welcher außerhalb des Futtermischwagens 10 angeordnet ist. Es könnte der zweite Sensor 25 auch mit der Cloud 28 kommunizierend ausgeführt sein, welche ebenfalls mit der ersten Steuereinheit 20 kommuniziert. Die erste Steuereinheit 20 und/oder die zweite Steuereinheit 51 können zur manuellen Bedienbarkeit 58 ausgebildet sein. Ebenso können die erste Steuereinheit 20 und/oder die zweite Steuereinheit 51 zur Kommunikation mit einem externen System 57 ausgebildet sein. Das heißt mit anderen Worten, dass das Betriebsprofil 29 mit Hilfe des Steuerungssystems 26 und/oder manuell verändert wird. Somit ist das Steuerungssystem 26 zur Ableitung des Betriebsprofils 29, oder mit anderen Worten zur Herbeiführung des Betriebsprofils 29, die On-Board-Rechenressourcen 30 und/oder Off-Board-Rechenressourcen 3 verwendend ausgebildet.

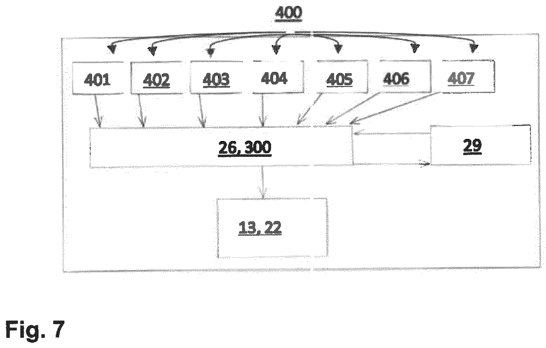

Fig. 7 ist in einer Prinzipdarstellung ein Ausschnitt des Steuerungssystems 26 des erfindungsgemäßen Futtermischwagens 10 abgebildet, wobei dem Steuerungssystem 26, insbesondere dem Rechenprogramm 300 zur Ermittlung des Betriebsprofils 29, diverse Parameter 400, wie beispielsweise ein Alter 401 des Energiespeichers 21, Wetterdaten 402, Zustand einer Fahroberfläche 403 zur Bestimmung eines Rollwiderstandes, ein Betriebsmodus 404, eine aktuelle Last 405, ein Tankfüllstand 406, ein Ladezustand des Energiespeichers 407, und andere, zur Verfügung gestellt werden können. Es wird mit Hilfe vom Rechenprogramm 300 das Betriebsprofil 29 ermittelt und schließlich der ersten Steuereinheit 20 übergeben.

Somit ist ein erfindungsgemäßes Verfahren zum Betreiben des Futtermischwagens 10 ausgebildet, wobei der Futtermischwagen 10 folgende Komponenten umfasst:
- den Antriebsstrang 11 mit dem Antriebsaggregat 12,
- das Fahrgestell 15 mit der Radaufhängung 16,
- den Vorratsbehälter 18 mit dem Verbraucher 100 in Form der Mischeinrichtung 19 zur Verarbeitung eines oder mehrerer in den Vorratsbehälter 18 eingefüllten Futtermittels, und
- das Steuerungssystem 26 zum Betreiben des Futtermischwagens 10 mit der ersten Steuereinheit 20.

Im Ergebnis ist das Steuerungssystem 26 zur Herbeiführung eines optimierten Energieverbrauchs des Futtermischwagens 10 und zur Erfassung und Ermittlung des Betriebsprofils 29 eines Betriebs des Futtermischwagens 10 ausgebildet.

Dadurch, dass beim erfindungsgemäßen Futtermischwagen und bei Anwendung des erfindungsgemäßen Verfahrens eine Optimierung des Betriebsprofils und Anpassung an individuelle Betriebsparameter ermöglicht ist, können schon bei der Konzeption des Futtermischwagens, also bei der konstruktiven Auslegung der Antriebe und Verbraucher, kleinere Antriebsaggregate vorausgewählt und damit Kosten und Bauraum eingespart werden.

### Bezugszeichenliste

- 10: Futtermischwagen
- 11: Antriebstrang
- 12: Antriebsaggregat
- 13: Erstes Antriebsmodul (Verbrennungsmotor)
- 14: Zweites Antriebsmodul (Elektromotor)
- 15: Fahrgestell
- 16: Radaufhängung
- 17: Verkleidung
- 18: Vorratsbehälter
- 19: Mischeinrichtung
- 20: erste Steuereinheit
- 21: Energiespeicher
- 22: Generator
- 23: Entnahmeeinrichtung
- 24: Erster Sensor
- 25: Zweiter Sensor
- 26: Steuerungssystem
- 27: Recheneinheit
- 28: Cloud
- 29: Betriebsprofil
- 30: On-Board-Rechenressourcen
- 31: Off-Board-Rechenressourcen
- 32: Erster Betriebsbereich
- 33: Zweiter Betriebsbereich
- 41: Pumpe
- 43: Hofstelle
- 44: Erster Stall
- 45: Zweiter Stall
- 46: Hochsilo
- 47: Maschinenhalle
- 48: Fahrsilo
- 49: -
- 50: Rad (von 10)
- 51: Zweite Steuereinheit
- 52: Elektrisches System
- 53: -elektrisches System
- 54: Strommeter
- 55: Spannungssensor
- 56: Kommunikationsgerät
- 57: Externes System
- 58: Manuelle Bedienbarkeit
- 59: Förderband
- 60: Parkposition (von 10)
- 61: Block
- 62: Block
- 63: Wirkpfeil

- 100: Verbraucher
- 210: Batteriepaket
- 211: Batteriezelle
- 281: erste Betriebsphase
- 282: zweite Betriebsphase
- 283: dritte Betriebsphase
- 284: vierte Betriebsphase
- 285: fünfte Betriebsphase
- 286: sechste Betriebsphase
- 291: Erste Profilkurve
- 292: Zweite Profilkurve
- 293: Wert
- 294: Gesamtwert
- 300: Rechenprogramm
- 400: Parameter
- 401: Alter des Energiespeichers
- 402: Wetterdaten
- 403: Zustand Fahroberfläche
- 404: Betriebsmodus
- 405: Aktuelle Last
- 406: Tankfüllstand
- 407: Ladezustand des Energiespeichers
- P: Power
- T: Time

## Patentansprüche

1. Futtermischwagen (10), umfassend:
- einen Antriebsstrang (11) mit einem Antriebsaggregat (12),
- ein Fahrgestell (15) mit einer Radaufhängung (16),
- ein Vorratsbehälter (18) mit einem Verbraucher (100) in Form einer Mischeinrichtung (19) zur Verarbeitung eines oder mehrerer in den Vorratsbehälter (18) eingefüllten Futtermittels, und
- ein Steuerungssystem (26) zum Betreiben des Futtermischwagens (10) mit einer ersten Steuereinheit (20),
wobei das Antriebsaggregat (12) wirkverbunden mit dem Fahrgestell (15) ausgebildet ist und ein erstes Antriebsmodul (13) in Form einer Verbrennungskraftmaschine und wenigstens ein zweites Antriebsmodul (14) in Form eines Elektromotors umfasst,
wobei das Antriebsaggregat (12) für einen Fahrbetrieb des Futtermischwagens (10) ausgebildet ist und für seinen Fahrbetrieb die Verbrennungsmaschine (13) und den Elektromotor (14) aufweist,
wobei die Verbrennungskraftmaschine (13) und der Elektromotor (14) wirkverbindbar ausgeführt sind,
wobei der Futtermischwagen (10) ein Energiespeicher (21) zur Bereitstellung von elektrischer Energie für den Elektromotor (14) und/oder einen Verbraucher (100) umfasst;
**dadurch gekennzeichnet, dass**
die Verbrennungskraftmaschine (13) und der Elektromotor (14) sowohl unabhängig voneinander in Alleinbetrieb als auch gemeinsam miteinander antreibbar sind, so dass
- bei Befahren des Futtermischwagens (10) eines im Wesentlichen geschlossenen Gebäudes, wie beispielsweise eines Stalls (44, 45), die durch den Betrieb des Futtermischwagens (10) bedingten Emissionen reduziert werden und insbesondere Abgasemissionen bei elektrischem Betrieb ganz vermieden und Lärmemissionen stark minimiert werden
- und das erste Antriebsmodul (13) außerhalb des geschlossenen Gebäudes nutzbar ist, so dass der Energiespeicher (21) des Futtermischwagens (10) im Außenbetrieb nicht als Energielieferant für den Elektromotor (14) genutzt werden muss.

2. Futtermischwagen (10) nach Anspruch 1, **dadurch gekennzeichnet, dass** der Energiespeicher (21) bei Betrieb des Futtermischwagens (10) außerhalb der Gebäude (44, 45, 47) durch die im Außenbetrieb aktive Verbrennungskraftmaschine (13) aufladbar ist.

3. Futtermischwagen (10) nach Anspruch 1 oder 2, **dadurch gekennzeichnet, dass** die erste Steuereinheit (20) an ein Strommeter (54) zur Ermittlung eines Energieverbrauchs gekoppelt ist.

4. Futtermischwagen (10) nach einem der Ansprüche 1 bis 3, **dadurch gekennzeichnet, dass** die Verbrennungskraftmaschine (13) einen Generator (22) zur mittelbaren Energieversorgung des Elektromotors (14) umfasst.

5. Futtermischwagen (10) nach einem der vorhergehenden Ansprüche, **dadurch gekennzeichnet, dass** die erste Steuereinheit (20) zur Ansteuerung des Antriebsaggregates (12) bzw. einer diesem zugordneten Steuereinheit und/oder des Verbrauchers (100) bzw. einer diesem zugeordneten Steuereinheit ausgebildet ist, so dass die erste Steuereinheit (20) eine Master-Steuerung ausbildet, welcher etwaige andere Steuerungen und Subsysteme untergeordnet sein können.

6. Futtermischwagen (10) nach einem der vorhergehenden Ansprüche, **dadurch gekennzeichnet, dass** der Futtermischwagen weiterhin eine Entnahmeeinrichtung (23) und/oder weitere Verbraucher (100) zur Entnahme, Verarbeitung und Ausbringung der Futtermittel umfasst und die erste Steuereinheit (20) zum Betreiben der Entnahmeeinrichtung (23) und/oder der weiteren Verbraucher (100) des Futtermischwagens (10) ausgebildet ist.

7. Futtermischwagen (10) nach einem der vorhergehenden Ansprüche, **dadurch gekennzeichnet, dass** das Steuerungssystem (26) eine zweite, vorzugsweise außerhalb des Futtermischwagens (10) vorgesehene, Steuereinheit (51) aufweist, welche mit der ersten Steuereinheit (20) kommunizierend ausgebildet ist.

8. Futtermischwagen (10) nach einem der vorhergehenden Ansprüche, **dadurch gekennzeichnet, dass** die erste Steuereinheit (20) wenigstens einen im Futtermischwagen (10) ausgebildeten ersten Sensor (24) aufweist, welcher mit zumindest einem außerhalb des Futtermischwagens (10) ausgebildeten zweiten Sensor (25) wirkverbunden ausgebildet ist.

9. Futtermischwagen (10) nach einem der vorhergehenden Ansprüche, **dadurch gekennzeichnet, dass** das Steuerungssystem (26) zur Erfassung von Betriebsparameter ausgebildet ist und/oder zur kontaktlosen Kommunikation der ersten Steuereinheit (20) mit der zweiten Steuereinheit (51) und vice versa ausgebildet ist.

10. Futtermischwagen (10) nach einem der vorhergehenden Ansprüche , **dadurch gekennzeichnet, dass** das Steuerungssystem (26) zur Kommunikation mit Hilfe einer Cloud (28) ausgebildet ist, wobei die Cloud (28) vorzugsweise der zweiten Steuereinheit (51) zugeordnet ist.

11. Verfahren zum Betreiben eines Futtermischwagens (10) nach einem der Ansprüche 1 bis 10, wobei der Futtermischwagen (10) folgende Komponenten umfasst:
- einen Antriebsstrang (11) mit einem Antriebsaggregat (12),
- ein Fahrgestell (15) mit einer Radaufhängung (16),
- ein Vorratsbehälter (18) mit einem Verbraucher (100) in Form einer Mischeinrichtung (19) zur Verarbeitung eines oder mehrerer in den Vorratsbehälter (18) eingefüllten Futtermittels, und
- ein Steuerungssystem (26) zum Betreiben des Futtermischwagens (10) mit einer ersten Steuereinheit (20),
- ein Antriebsaggregat (12), mit einem ersten Antriebsmodul (13) in Form einer Verbrennungskraftmaschine und wenigstens einem zweiten Antriebsmodul (14) in Form eines Elektromotors,
- einen Energiespeicher (21) zur Bereitstellung von elektrischer Energie für das zweite Antriebsmodul (14) und/oder des Verbrauchers (100),
**dadurch gekennzeichnet, dass**
- zur Herbeiführung eines optimierten Energieverbrauchs des Futtermischwagens (10) das Steuerungssystem (26) zur Erfassung und Ermittlung eines Betriebsprofils (29) eines Betriebes des Futtermischwagens (10) ausgebildet ist und
- das Steuerungssystem (26) zur Erfassung und Ermittlung des Betriebsprofils (29) ausgebildet ist, so dass mit Hilfe des Steuerungssystems (26) die Möglichkeit besteht, das Betriebsprofil (29) in Abhängigkeit von regelmäßigen, somit wiederkehrenden Betriebsmustern auszubilden.

12. Verfahren nach Anspruch 11, **dadurch gekennzeichnet, dass** das Steuerungssystem (26) in Form eines KI-Systems oder ein KI-System umfassend ausgebildet ist.

13. Verfahren nach Anspruch 11 oder 12, **dadurch gekennzeichnet, dass** das Steuerungssystem (26) zur Ableitung des Betriebsprofils (29) On-Board-Rechenressourcen (30) und/oder Off-Board-Rechenressourcen (31) verwendet.

14. Verfahren nach einem der Ansprüche 11 bis 13, **dadurch gekennzeichnet, dass** der Betrieb des Antriebsaggregats (12) und/oder der Betrieb von Verbrauchern (100) des Futtermischwagens (10) an das Betriebsprofil (29) angepasst wird, wobei die Anpassung vorzugsweise mit Hilfe des Steuerungssystems (26) erfolgt.

15. Verfahren nach einem der Ansprüche 11 bis 14, **dadurch gekennzeichnet, dass** der Energiespeicher (21) mit Hilfe eines mit der Verbrennungskraftmaschine (13) wirkverbundenen Generators (22) mit Energie gespeist wird, wobei das Betriebsprofil (29) einen ersten Betriebsbereich (32) der Verbrennungskraftmaschine (13) zur Speisung des Energiespeicher (21) und eine zweiten Betriebsbereich (33) zum Betreiben des Elektromotors (14) mit Hilfe des Energiespeichers (21) besitzt.

## Claims

1. Feed mixer wagon (10), comprising:
- a drive train (11) with a drive unit (12),
- a chassis (15) with a wheel suspension (16),
- a storage container (18) with a consumer (100) in the form of a mixing device (19) for processing one or more feedstuffs filled into the storage container (18), and
- a control system (26) for operating the feed mixer wagon (10) with a first control unit (20),
wherein the drive unit (12) is designed to be operatively connected to the chassis and comprises a first drive module (13) in the form of an combustion engine and at least one second drive module (14) in the form of an electric motor,
wherein the drive unit (12) is designed for driving the feed mixer wagon (10) and comprises the combustion engine (13) and the electric motor (14) for its driving operation, wherein the combustion engine (13) and the electric motor (14) are operatively connected,
wherein the feed mixer wagon (10) comprises an energy storage device (21) for supplying electrical energy to the electric motor (14) and/or a consumer (100);
**characterised in that**
the combustion engine (13) and the electric motor (14) can be driven both independently of each other in sole operation and together with each other,
so that
- when the feed mixer wagon (10) is driven into a substantially closed building, such as a stable (44, 45), the emissions caused by the operation of the feed mixer wagon (10) are reduced and, in particular, exhaust emissions are completely avoided during electric operation and noise emissions are strongly minimised,
- and the first drive module (13) can be used outside the enclosed building, so that the energy storage device (21) of the feed mixer wagon (10) does not have to be used as an energy source for the electric motor (14) during outdoor operation.

2. Feed mixer wagon (10) according to claim 1, **characterised in that** the energy storage device (21) can be charged by the combustion engine (13) active in outdoor operation when the feed mixer wagon (10) is operated outside the buildings (44, 45, 47).

3. Feed mixer wagon (10) according to claim 1 or 2, **characterised in that** the first control unit (20) is coupled to an electricity meter (54) for determining energy consumption.

4. Feed mixer wagon (10) according to one of claims 1 to 3, **characterised in that** the combustion engine (13) comprises a generator (22) for indirectly supplying energy to the electric motor (14).

5. Feed mixer wagon (10) according to one of the preceding claims, **characterised in that** the first control unit (20) for controlling the drive unit (12) or a control unit assigned to it and/or the consumer (100) or a control unit assigned to it, so that the first control unit (20) forms a master control unit to which any other control units and subsystems can be subordinate.

6. Feed mixer wagon (10) according to one of the preceding claims, **characterised in that** the feed mixer wagon further comprises an extraction device (23) and/or further consumers (100) for extracting, processing and distributing the feed, and the first control unit (20) is designed to operate the extraction device (23) and/or the further consumers (100) of the feed mixer wagon (10).

7. Feed mixer wagon (10) according to one of the preceding claims, **characterised in that** the control system (26) has a second control unit (51), preferably provided outside the feed mixer wagon (10), which is designed to communicate with the first control unit (20).

8. Feed mixer wagon (10) according to one of the preceding claims, **characterised in that** the first control unit (20) has at least one first sensor (24) formed in the feed mixer wagon (10), which is operatively connected to at least one second sensor (25) formed outside the feed mixer wagon (10).

9. Feed mixer wagon (10) according to one of the preceding claims, **characterised in that** the control system (26) is designed to record operating parameters and/or for contactless communication between the first control unit (20) and the second control unit (51) and vice versa.

10. Feed mixer wagon (10) according to one of the preceding claims, **characterised in that** the control system (26) is designed for communication with the aid of a cloud (28), wherein the cloud (28) is preferably assigned to the second control unit (51).

11. Method for operating a feed mixer wagon (10) according to one of claims 1 to 10, wherein the feed mixer wagon (10) comprises the following components:
- a drive train (11) with a drive unit (12),
- a chassis (15) with a wheel suspension (16),
- a storage container (18) with a consumer (100) in the form of a mixing device (19) for processing one or more feedstuffs filled into the storage container (18), and
- a control system (26) for operating the feed mixer wagon (10) with a first control unit (20),
- a drive unit (12) with a first drive module (13) in the form of an combustion engine and at least one second drive module (14) in the form of an electric motor,
- an energy storage device (21) for supplying electrical energy to the second drive module (14) and/or the consumer (100),
**characterised in that**
- in order to achieve optimised energy consumption of the feed mixer wagon (10), the control system (26) is designed to record and determine an operating profile (29) of the feed mixer wagon (10), and
- the control system (26) is designed to record and determine the operating profile (29) so that, with the aid of the control system (26), it is possible to develop the operating profile (29) depending on regular, and thus recurring, operating patterns.

12. Method according to claim 11, **characterised in that** the control system (26) is designed in the form of an AI system or comprises an AI system.

13. Method according to claim 11 or 12, **characterised in that** the control system (26) uses on-board computing resources (30) and/or off-board computing resources (31) to derive the operating profile (29).

14. Method according to one of claims 11 to 13, **characterised in that** the operation of the drive unit (12) and/or the operation of consumers (100) of the feed mixer wagon (10) is adapted to the operating profile (29), whereby the adaptation is preferably carried out with the aid of the control system (26).

15. Method according to one of claims 11 to 14, **characterised in that** the energy storage device (21) is supplied with energy by means of a generator (22) operatively connected to the combustion engine (13), wherein the operating profile (29) has a first operating range (32) of the combustion engine (13) for feeding the energy storage device (21) and a second operating range (33) for operating the electric motor (14) with the aid of the energy storage device (21).

## Revendications

1. Mélangeuse (10) comprenant :
- une chaîne d'entraînement (11) avec un agrégat moteur (12),
- un châssis (15) avec une suspension de roue (16),
- un réservoir de stockage (18) avec un consommateur (100) sous la forme d'un dispositif de mélange (19) pour le traitement d'un ou plusieurs aliments pour animaux versés dans le réservoir de stockage (18), et
- un système de commande (26) pour faire fonctionner la mélangeuse (10) avec une première unité de commande (20),
l'agrégat moteur (12) étant relié de manière fonctionnelle au châssis et comprenant un premier module d'entraînement (13) sous la forme d'un moteur à combustion interne et au moins un deuxième module d'entraînement (14) sous la forme d'un moteur électrique, l'agrégat moteur (12) étant conçu pour le fonctionnement en mode conduite de la mélangeuse (10) et comportant, pour son fonctionnement en mode conduite, le moteur à combustion interne (13) et le moteur électrique (14), le moteur à combustion interne (13) et le moteur électrique (14) étant reliés de manière fonctionnelle,
la mélangeuse (10) comprenant un accumulateur d'énergie (21) pour fournir de l'énergie électrique au moteur électrique (14) et/ou à un consommateur (100) ;
**caractérisée en ce que**
le moteur à combustion interne (13) et le moteur électrique (14) peuvent être entraînés aussi bien indépendamment l'un de l'autre en fonctionnement individuel qu'ensemble,
de sorte que
- lorsque la mélangeuse (10) circule dans un bâtiment essentiellement fermé, tel qu'une étable (44, 45), les émissions dues au fonctionnement de la mélangeuse (10) sont réduites et, en particulier, les émissions de gaz d'échappement sont totalement évitées en mode électrique et les émissions sonores sont fortement minimisées,
- et le premier module d'entraînement (13) peut être utilisé à l'extérieur du bâtiment fermé, de sorte que l'accumulateur d'énergie (21) de la mélangeuse (10) ne doit pas être utilisé comme source d'énergie pour le moteur électrique (14) lors d'un fonctionnement à l'extérieur.

2. Mélangeuse (10) selon la revendication 1, **caractérisée en ce que** l'accumulateur d'énergie (21) peut être rechargé par le moteur à combustion interne (13) actif en fonctionnement extérieur lorsque la mélangeuse (10) est utilisée à l'extérieur des bâtiments (44, 45, 47).

3. Mélangeuse (10) selon la revendication 1 ou 2, **caractérisée en ce que** la première unité de commande (20) est couplée à un compteur d'électricité (54) pour déterminer la consommation d'énergie.

4. Mélangeuse (10) selon l'une des revendications 1 à 3, **caractérisée en ce que** le moteur à combustion interne (13) comprend un générateur (22) pour l'alimentation indirecte en énergie du moteur électrique (14).

5. Mélangeuse (10) selon l'une des revendications précédentes, **caractérisée en ce que** la première unité de commande (20) est conçue pour commander l'agrégat moteur (12) ou une unité de commande qui lui est associée et/ou le consommateur (100) ou d'une unité de commande qui lui est associée, de sorte que la première unité de commande (20) forme une commande maître à laquelle d'autres commandes et sous-systèmes éventuels peuvent être subordonnés.

6. Mélangeuse (10) selon l'une des revendications précédentes, **caractérisée en ce que** la mélangeuse comprend en outre un dispositif de prélèvement (23) et/ou d'autres consommateurs (100) pour le prélèvement, le traitement et la distribution des aliments pour animaux, et la première unité de commande (20) est conçue pour faire fonctionner le dispositif de prélèvement (23) et/ou les autres consommateurs (100) de la mélangeuse (10).

7. Mélangeuse (10) selon l'une des revendications précédentes, **caractérisée en ce que** le système de commande (26) comprend une deuxième unité de commande (51), prévue de préférence à l'extérieur de la mélangeuse (10), qui est conçue pour communiquer avec la première unité de commande (20).

8. Mélangeuse (10) selon l'une des revendications précédentes, **caractérisée en ce que** la première unité de commande (20) comprend au moins un premier capteur (24) formé dans la mélangeuse (10), qui est relié de manière fonctionnelle à au moins un deuxième capteur (25) formé à l'extérieur de la mélangeuse (10).

9. Mélangeuse(10) selon l'une des revendications précédentes, **caractérisée en ce que** le système de commande (26) est conçu pour enregistrer des paramètres de fonctionnement et/ou pour assurer la communication sans contact entre la première unité de commande (20) et la deuxième unité de commande (51) et vice versa.

10. Mélangeuse (10) selon l'une des revendications précédentes, **caractérisée en ce que** le système de commande (26) est conçu pour communiquer à l'aide d'un cloud (28), le cloud (28) étant de préférence associé à la deuxième unité de commande (51).

11. Procédé pour faire fonctionner une mélangeuse (10) selon l'une des revendications 1 à 10, la mélangeuse (10) comprenant les composants suivants :
- une chaîne d'entraînement (11) avec un agrégat moteur (12),
- un châssis (15) avec une suspension de roue (16),
- un réservoir de stockage (18) avec un consommateur (100) sous la forme d'un dispositif de mélange (19) pour le traitement d'un ou plusieurs aliments pour animaux versés dans le réservoir de stockage (18), et
- un système de commande (26) pour faire fonctionner la mélangeuse (10) avec une première unité de commande (20),
- un agrégat moteur (12) avec un premier module d'entraînement (13) sous la forme d'un moteur à combustion interne et au moins un deuxième module d'entraînement (14) sous la forme d'un moteur électrique,
- un accumulateur d'énergie (21) pour fournir de l'énergie électrique au deuxième module d'entraînement (14) et/ou au consommateur (100),
**caractérisé en ce que**
- afin d'obtenir une consommation d'énergie optimisée de la mélangeuse (10), le système de commande (26) est conçu pour enregistrer et déterminer un profil de fonctionnement (29) d'une exploitation de la mélangeuse (10) et
- le système de commande (26) est conçu pour enregistrer et déterminer le profil de fonctionnement (29) de manière à pouvoir, à l'aide du système de commande (26), établir le profil de fonctionnement (29) en fonction de modèles de fonctionnement réguliers, donc récurrents.

12. Procédé selon la revendication 11, **caractérisé en ce que**
le système de commande (26) est conçu sous la forme d'un système d'IA ou comprend un système d'IA.

13. Procédé selon la revendication 11 ou 12, **caractérisé en ce que** le système de commande (26) utilise des ressources de calcul embarquées (30) et/ou des ressources de calcul hors bord (31) pour dériver le profil de fonctionnement (29).

14. Procédé selon l'une des revendications 11 à 13, **caractérisé en ce que** le fonctionnement de l'agrégat moteur (12) et/ou le fonctionnement des consommateurs (100) de la mélangeuse (10) sont adaptés au profil de fonctionnement (29), l'adaptation étant effectuée de préférence à l'aide du système de commande (26).

15. Procédé selon l'une des revendications 11 à 14, **caractérisé en ce que** l'accumulateur d'énergie (21) est alimenté en énergie à l'aide d'un générateur relié au moteur à combustion interne (13), le profil de fonctionnement (29) comportant une première plage de fonctionnement (32) du moteur à combustion interne (13) pour alimenter l'accumulateur d'énergie (21) et une deuxième plage de fonctionnement (33) pour faire fonctionner le moteur électrique (14) à l'aide de l'accumulateur d'énergie (21).
